Europäisches Patentamt

European Patent Office

Office européen des brevets

(11) Publication number: **0 455 209 A2**

# EUROPEAN PATENT APPLICATION

(21) Application number: 91106988.8

(51) Int. Cl.⁵: **G11B 23/04**

(22) Date of filing: 30.04.91

(30) Priority: 02.05.90 JP 47185/90
02.05.90 JP 47186/90
02.05.90 JP 47187/90
05.10.90 JP 104551/90

(43) Date of publication of application:
**06.11.91 Bulletin 91/45**

(84) Designated Contracting States:
**DE FR GB**

(71) Applicant: **KONICA CORPORATION**
**26-2, Nishi-shinjuku 1-chome Shinjuku-ku**
**Tokyo(JP)**

(72) Inventor: **Takahashi, Nobuaki, Konica**
**Corporation**
**1 Sakura-machi**
**Hino-shi, Tokyo(JP)**
Inventor: **Shinozaki, Souji, Konica Corporation**
**1 Sakura-machi**
**Hino-shi, Tokyo(JP)**
Inventor: **Hirose, Kimimoto, Konica Magnetic**

**Products Inc.**
**801 Oaza Nakadate Azanunoge,**
**Tamaho-machi**
**Nakakoma-gun, Yamanashi-ken(JP)**
Inventor: **Komeiji, Masayuki, Konica Magnetic**
**Products Inc.**
**801 Oaza Nakadate Azanunoge,**
**Tamaho-machi**
**Nakakoma-gun, Yamanashi-ken(JP)**
Inventor: **Okubo, Hitoshi, Konica Corporation**
**1 Sakura-machi**
**Hino-shi, Tokyo(JP)**
Inventor: **Sakurada, Shinji, Konica Magnetic**
**Products Inc.**
**801 Oaza Nakadate Azanunoge,**
**Tamaho-machi**
**Nakakoma-gun, Yamanashi-ken(JP)**

(74) Representative: **Türk, Gille, Hrabal**
**Brucknerstrasse 20**
**W-4000 Düsseldorf 13(DE)**

(54) **Tape cassette.**

(57) A tape cassette which is adapted to embody a number of bit patterns in its main body for representing cassette information including tape type information in the cassette. An original pattern to embody a bit pattern is a hole perforated in the wall of the cassette with a block member to close the opening of the hole, and by selective removal of the block member a bit pattern is obtained. For the purpose of smooth and correct punch out of the block member from the main body, a notch is provided through the peripheral of the block member on a selected surface of the connect member corresponding to the punching direction.

FIG. 3

## BACKGROUND OF THE INVENTION

The present invention relates to a tape cassette, and more particularly relates to a tape cassette for video or audio use.

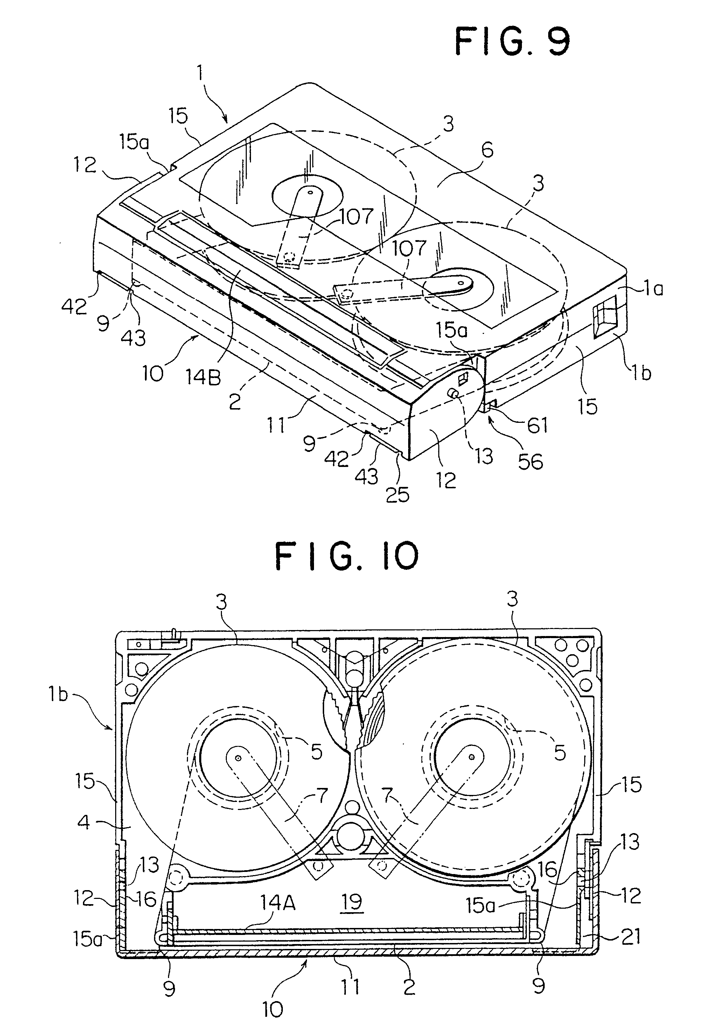

The tape cassette illustrated in Fig. 9 and Fig. 10 is widely known as a tape cassette for video use.

A main body 1 of this tape cassette is composed of an upper half 1a and a lower half 1b, and tape reels 3, 3 around which a magnetic tape 2 is wound, is provided inside the main body 1 of the tape cassette. The tape reels 3,3 are located on drive shaft insert holes 5, 5 provided in a bottom wall 4 of the main body 1 of the tape cassette. The rotating centers of the tape reels 3, 3 are pushed downward by leaf springs 7, 7 which are fixed to the inside surface of an upper wall 6. The tape 2 is guided out from one of the tape reels 3 through a tape guide 9 which is provided on the right or left side of the front portion of the main body 1 of the tape cassette, and wound around the other tape reel 3 through a tape guide 9 which is provided on the right or left side of the front portion of the main body 1.

A protective front lid 10 which can be opened and closed, is rotatably provided in the front of the main body 1 of the tape cassette. This front lid 10 comprises: a front plate 11 which entirely covers the front portion of the main body 1 of the tape cassette; connecting members (side walls) 12, 12 which are connected with the right and left end portions of the front plate 11; and shafts 13, 13 which are protruded from the inside surfaces of both connecting members 12, 12, wherein both connecting members 12, 12 are opposed to each other. The shafts 13, 13 are engaged with holes 16, 16 which are formed in front portions 15a, 15a of right and left walls 15, 15 of the main body 1 of the tape cassette. The front lid 10 is rotatably provided in such a manner that it can open and close the front portion of the main body 1 of the tape cassette. The front lid 10 is always pushed by a torsion coil spring (not shown in the drawing) provided around the shaft 13 so that the front lid 10 can be closed. When the tape cassette is not used, the front lid 10 is closed and locked so that the outside of the tape 2 which has been guided outside the case, can be protected. A gap 21 is formed between the side wall 15 and the connecting member 12 of the front lid 10 which is opposed to the side wall 15. A lock means 56 which is used to lock the front lid 10 is assembled into the gap 21. When the tape cassette is set in a magnetic playback device, a release member provided to the magnetic playback device relatively enters into the gap 21 from the front of the main body 1 of the tape cassette. The aforementioned release member comes into contact with a protrusion 61 of the lock means 56 so that the lock condition of the closed front lid 10 can be released. As a result, the front lid 10 is opened, and a tape loading pin provided to the magnetic playback device enters into a pocket 19 formed on the front side of the main body 1 of the tape cassette, and pulls out the tape 2 to the front of the case. In the drawing, the numeral 14A is a rear lid to protect the rear side of the tape, and the numeral 14B is an upper lid to close an opening formed between an upper wall 6 of the main body 1 and the front lid 10, wherein the upper lid 14B is integrally formed together with the rear lid 14A.

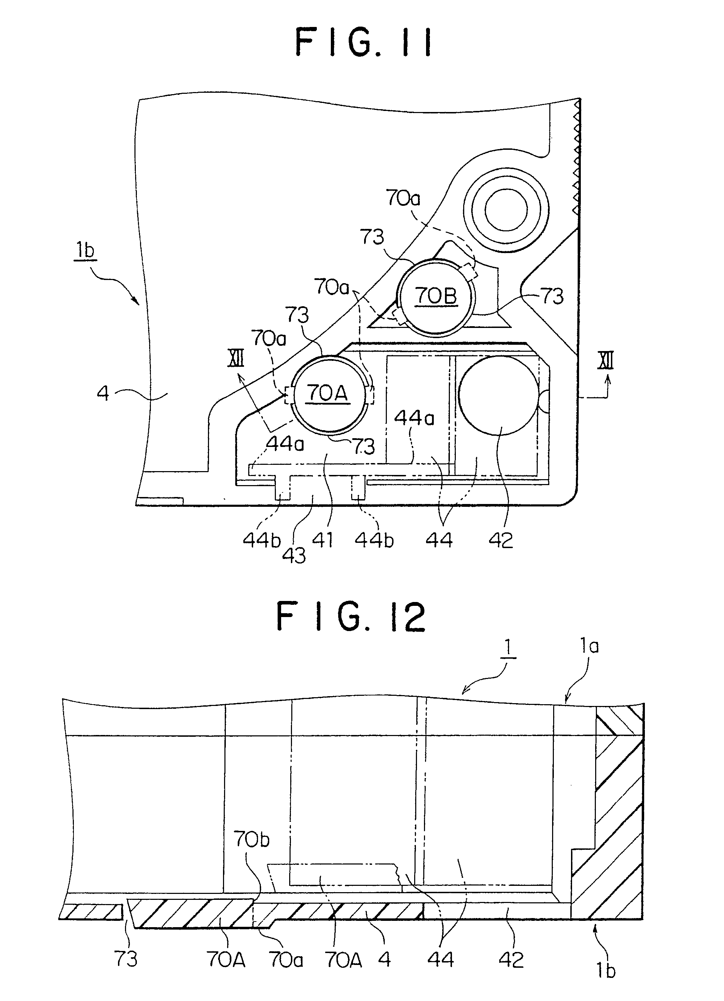

In some cases, the data recorded in a tape needs to be preserved. When a recording operation is conducted on a tape in which data has been already recorded, the previously recorded data is erased by the action of an erasing head, and right after that, new data is recorded by a recording head. In order to prevent the necessary data from being unintentionally erased, a mechanism is provided in the main body 1 of the tape cassette. Fig. 11 is an enlarged plan view showing the aforementioned portion in the main body 1 of the tape cassette, and Fig. 12 is an enlarged sectional view taken on line XII-XII in Fig. 11.

A chamber 41 to install a plate-like sliding member 44 is formed in the rear corner of the main body 1 of the tape cassette. A through hole 42 is formed in the bottom wall 4 of the lower half 1b which composes the chamber 41. When the sliding member 44 is located in the position illustrated by a two-dotted-chain-line in Fig. 11, the through hole 42 is opened, and when the sliding member 44 is located in the position illustrated by a three-dotted-chain-line, the through hole 42 is closed by the sliding member 44. A shank 44a of the sliding member 44 is provided with a claw 44b in such a manner that the claw 44b protrudes through a window 43 formed in the rear side wall of the main body 1 of the tape cassette. When the claw 44b is manually moved from the outside of the main body 1 of the tape cassette, the sliding member 44 is selectively located in either the two-dotted-chain-line position or the three-dotted-chain-line position. When the sliding member 44 is located in the two-dotted-chain-line position, the through hole 42 is opened, and recording can be conducted under this condition. When the sliding member 44 is located in the three-dotted-chain-line position, the through hole 42 is closed so that it is impossible to conduct recording. Consequently, the recorded data on the tape can not be erased. A sensor provided in the magnetic recording device can detect the condition of the through hole 42 by detecting the depth of the through hole 42, so that whether the through hole is opened or not can be detected.

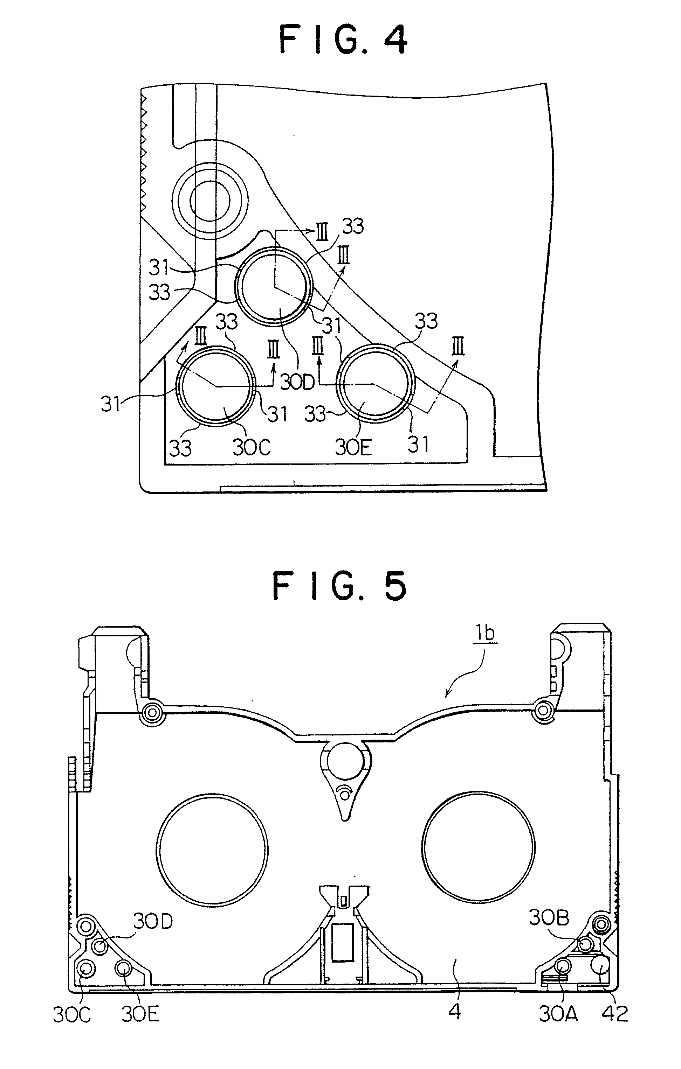

Other than the aforementioned through hole means, identification means are provided in the lower half of the tape cassette which can distinguish the kind of the tape installed in the main body 1 of the tape cassette. Circles indicated by the numerals 70A, 70B in Fig. 11 are the identification means described above. Detection is conducted by detecting whether the means 70A and 70B are opened or closed in the same manner as the detection by the aforementioned through hole 42. These identification means comprise: the circles 70A, 70B provided in the positions close to the through hole 42 of the lower half; and three circles which are provided in the same manner as the circles 70A, 70B, wherein the three circles are located in the positions 30C, 30D and 30E in Fig. 5. Accordingly, the tape cassette is provided with 5 detection means in total. The kinds of the magnetic tape are as follows: a regular tape or a long play one; an iron oxide tape or a metal one; a coated tape or a vapor-deposited one; and a normal tape or a high resolution tape of a high band specification. The above-mentioned kinds of magnetic tape can be detected by judging whether the aforementioned identification means are opened or closed.

The open condition or closed condition of each identification means is determined when the lower half case is molded. Recently, it has been requested in that: when the lower half case is molded, all the identification means are closed; and after the manufacture of the tape cassette has been completed, the identification means are selectively opened in accordance with the kind of the magnetic tape. In the manufacturing method described above, the same metallic mold can be used when the lower half is molded, which is convenient.

In order to meet the aforementioned request, the structure of the tape cassette illustrated in Fig. 11 and Fig. 12 has been proposed.

Namely, the disk-shaped identification means 70A is connected with the bottom wall 4 of the lower half 1b through a connecting portion 70a, and the identification means 70A is separate from the bottom wall 4 except for the connecting portion 70a, wherein a slit 73 is formed between the identification means 70A and the bottom wall 4. As illustrated in Fig. 12, the inner surface of the identification means 70A is located a little more inside the main body 1 of the cassette than the inner surface of the bottom wall 4, so that the identification means 70A protrudes a little inside the main body 1 of the cassette and a vertical step 70b is formed on the arc of the identification means 70A. The identification means 70A can be made open in such a manner that: after the manufacture of the tape cassette has been completed, the identification means 70A is pushed from the outside of the main body 1 in the direction indicated by an arrow illustrated in a dotted line so that stress concentration can be caused in the notch formed by the step 70b and the identification means 70A can be broken at the connecting portion 70a. In the manner described above, the identification means 70A is removed from the bottom wall 4 and an opening is formed.

However, the following problem is caused in the aforementioned case: the identification means 70A removed from the bottom wall 4 enters into the inside of the cassette body so that it is loose inside the cassette and makes unpleasant noises when the cassette is moved. The aforementioned situation is the same in the cases of the identification means 70B and the identification means located in the positions of 30C, 30D and 30E in Fig. 5. Especially, in the case of the identification means 70A located in the position close to the through hole 42, the identification means 70A which has been removed from the bottom wall 4 as illustrated by a two-dotted-chain-line, tends to enter into the reciprocating motion path of the sliding member 44 illustrated by a three-dotted-chain line, so that the motion of the sliding member 44 is obstructed.

Recently, there has been a request by both manufacturers and users that: after the tape cassette has been completed, the identification means is selectively opened according to the kind of the magnetic tape. The reason is as follows: in the case of manufacturers, the same metallic mold having the same cavity shape can be used in the manufacturing process; and in the case of users, it is possible to record necessary information on the main body of the cassette.

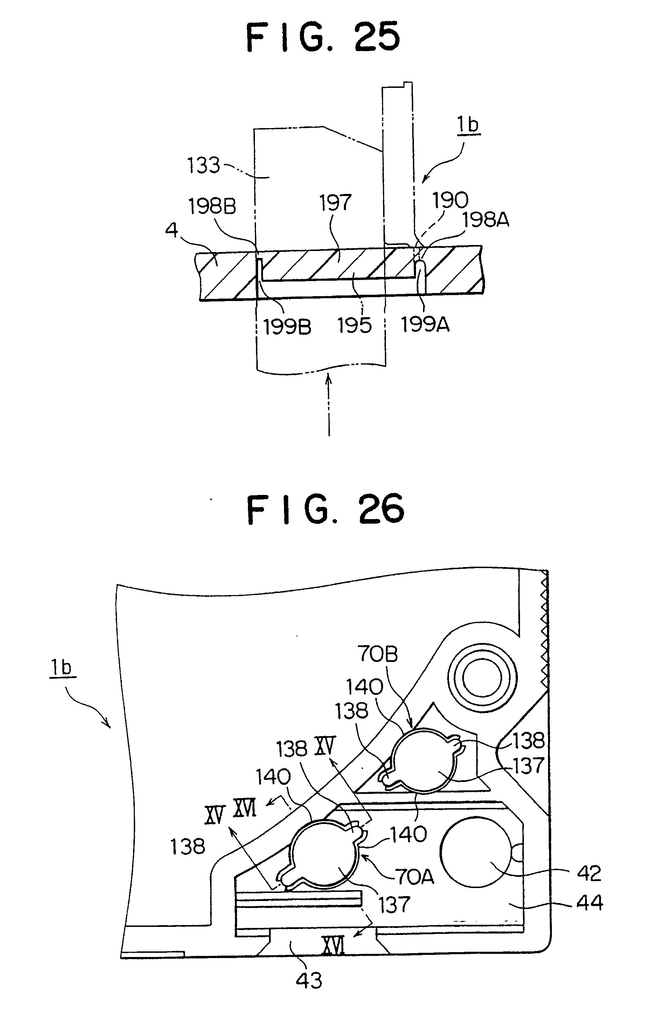

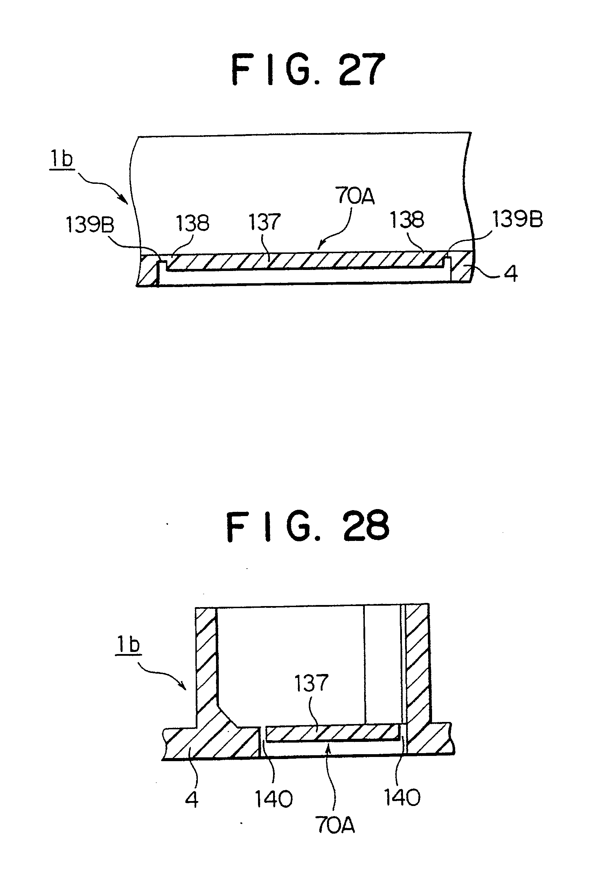

In order to meet the request described above, the structure of a tape cassette can be considered which is shown in Fig. 26, Fig. 27 which is an enlarged sectional view taken on line XV-XV in Fig. 26, and Fig. 28 which is an enlarged sectional view taken on line XVI-XVI in Fig. 26. The shape of the identification means 70A, 70B is circular, and is thinner than the bottom wall 4. Each identification means is provided with two trunnions 138, 138. The portions of the identification means except the two trunnions 138, 138 are formed into semi-circular slits 140, 140 so that the identification means is separated from the bottom wall 4 in these portions. The tip portions of the trunnions 138, 138 are provided with grooves 139B, 139B, wherein the grooves 139B, 139B are formed downward. The thickness of these groove portions 139B, 139B is very thin, for example, 0.3 - 0.6 mm. Consequently, when the circular portion 137 of the identification means 70A and 70B is pushed from the reverse side of the tape cassette, the circular portion 137 can be easily removed and a through hole can be formed.

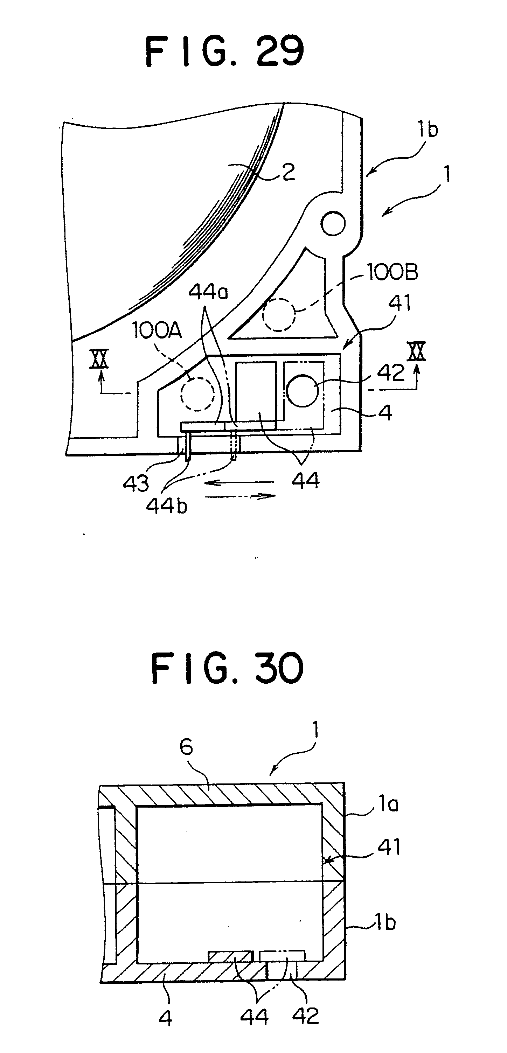

However, when the circular portion 137 which has been removed from the bottom wall 4, enters into the main body of the cassette, it comes into contact with the sliding member 44 shown in Fig. 29 or it is located in the position close to the sliding member 44, and the circular portion 137 obstructs the movement of the sliding member 44.

The aforementioned request and problem exist in the case of the tape cassette for DAT (digital audio tape recorder) use in the same way as the tape cassette for 8 mm video use.

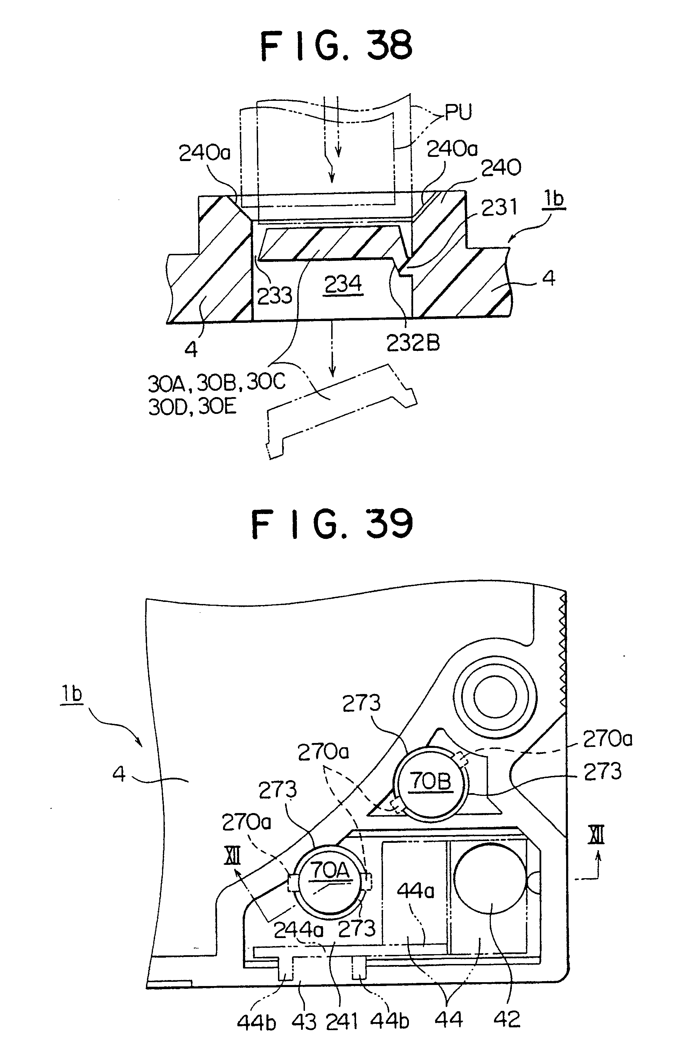

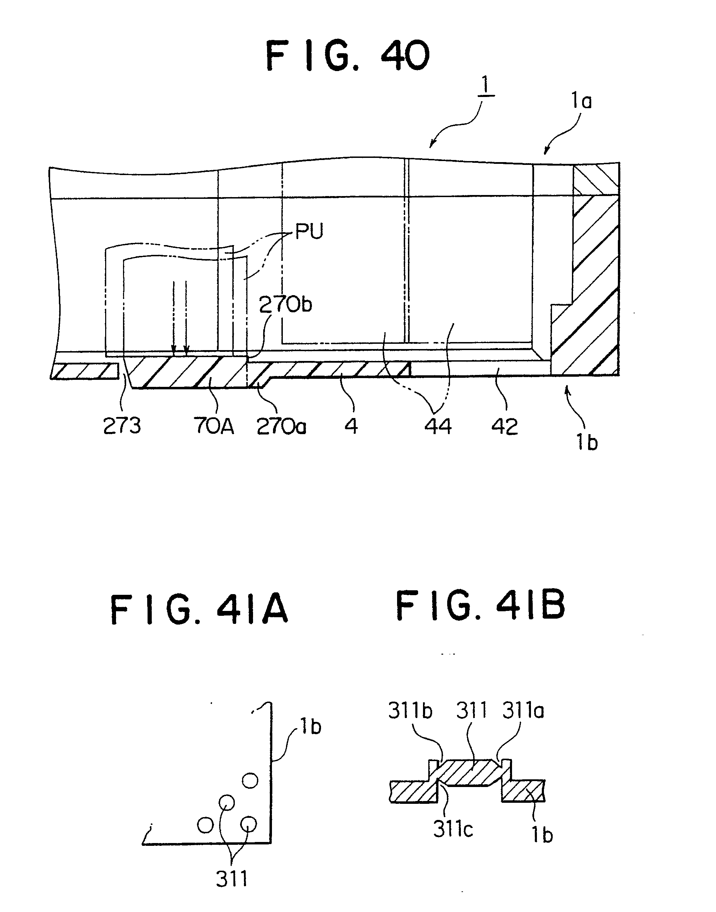

Further, in order to selectively open the detecting means after the molding of the lower half of the tape cassette has been completed, the structure of the identification means illustrated in Fig. 39 and Fig. 40 has been proposed.

Namely, the identification means 70A is connected with the bottom wall 4 of the lower half 1b through the connecting portions 270a, 270a, and the portions except the connecting portions 270a, 270a are separate from the bottom wall 4, wherein the slit 273 is formed between the identification means 70A and the bottom wall 4. The inner surface of the identification means 70A is located a little more inside the main body 1 of the cassette than the inner surface of the bottom wall 4, so that the identification means 70A protrudes a little inside the main body 1 of the cassette and a vertical step 270b is formed on the arc of the identification means 70A. The identification means 70A can be made open in such a manner that: after the molding of the lower half of the tape cassette has been completed, the identification means 70A is pushed from the inside of the main body 1 so that stress concentration can be caused in the notch formed by the step 270b and the identification means 70A can be broken at the connecting portion 270a. In the manner described above, the identification means 70A is removed from the bottom wall 4 and an opening is formed.

When the aforementioned opening is formed, punch PU indicated by a two-dotted-chain line in Fig. 40 descends and separates the identification means 70A from the lower half 4. In order to cause stress concentration effectively in the step 270b during the aforementioned punching process, it is necessary to use punch PU, the diameter of which is the same as that of the identification means 70A. Accordingly, when the positioning of the lower half case 4 is not accurate, the lower half case 4 is damaged by punch PU which descends in the manner illustrated in a three-dotted-chain -line in Fig. 40. In order to prevent the problem described above, the lower half case must be accurately positioned, which lowers the productivity of the tape cassette.

It is desirable that the identification means can be easily separated from the bottom wall by both manufacturers and users.

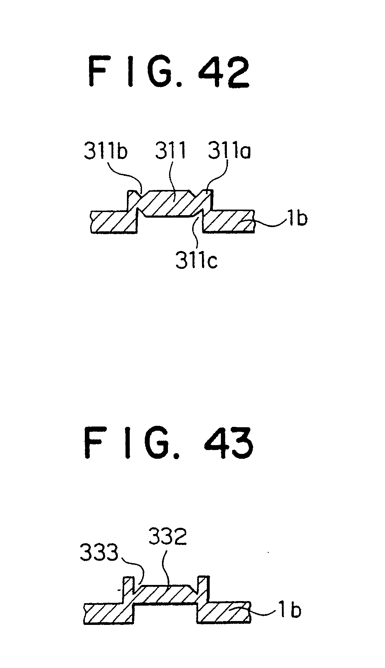

An example of a conventional identification means is shown in Fig. 43. In this case, a punch tab 332 formed in a predetermined position of the lower half 1b is punched out from the inside (the upper side in Fig. 43) of the lower half 1b. As compared with the case in which the tab is punched out from the outside of the lower half 1b, it is difficult to punch out the tab from the inside.

The numeral 333 is a notch formed along the punch tab 332. Since the punch tab is provided with the aforementioned notch, punching can be easily and accurately performed.

Consequently, it is not possible for a so-called software maker to form an opening in order to distinguish the kind of a tape cassette in accordance with the content of recorded information. Even if the aforementioned punch tab is provided in the detection means, its advantage can not be derived.

In the case of the lower half shown in Fig. 43, it is not necessarily impossible to punch the tab 332 from the outside. However, when the tab is punched out from the outside, burrs are formed and cracks occur in the lower half 1b, so that the value as a commodity is sharply decreased.

## SUMMARY OF THE INVENTION

The first object of the present invention is to provide a tape cassette which is characterized in that: the identification means separated from the main body of a cassette does not enter inside the main body so that noises can not be made and the motion of other members can not be obstructed.

The object of the present invention can be accomplished by a tape cassette which is characterized in that: an identification means by which cassette information can be detected is provided in the main body of the cassette; the aforementioned identification means is composed in such a manner that whether a through hole to open the surface of the aforementioned cassette body is formed or not, can be selected; the aforementioned identification means and the aforementioned cassette body are connected by a connecting portion; and a notch is formed in the aforementioned connecting portion, to which stress concentration is caused in order to break the aforementioned connecting portion when a load is given from the inside of the aforementioned cassette body.

The second object of the present invention is to provide a tape cassette which is characterized in that: when an identification means by which cassette information can be detected (for example, information about the kind of magnetic tape), is opened after the manufacture of the tape cassette has been completed, the removed identification means does not obstruct the movement of other movable members (for example, the aforementioned sliding member) in the tape cassette.

The object of the present invention can be accomplished by a tape cassette which is characterized in that: an identification means by which cassette information can be detected is provided in the main body of the cassette; the aforementioned identification means is composed in such a manner that whether a through hole to open the surface of the aforementioned cassette body is formed or not, can be selected; and the tape cassette has a connecting portion which connects the aforementioned identification means and the aforementioned tape cassette when the tape cassette is in the state that the aforementioned through hole has been formed.

The third object of the present invention is to provide a tape cassette which is characterized in that: when a through hole is formed by removing the identification means from the main body of the cassette, the positional relation between the main body of the cassette and the tool to be used is always accurate, so that the through hole can be safely formed with high productivity.

The object of the present invention can be accomplished by a tape cassette which is characterized in that: an identification means by which cassette information can be detected is provided in the main body of the cassette; the aforementioned identification means is composed in such a manner that whether a through hole to open the surface of the aforementioned cassette body is formed or not, can be selected; and a guide means which relatively guides the tool to be used for forming the aforementioned through hole, is provided to the aforementioned main body of the tape cassette.

The fourth object of the present invention is to provide a tape cassette which is characterized in that: a hole to distinguish the kind of a tape cassette can be easily and accurately formed either by a manufacturer or a software maker.

The aforementioned object can be accomplished by a tape cassette which is characterized in that: the main body of the tape cassette is composed of two halves which are fastened to each other; a punching portion by which the kind of tape cassette can be detected is formed in the tape cassette; and a notch is formed on both sides of the plate portion in which the punching portion is formed, in such a manner that the notch portion is formed along the punching portion.

## BRIEF DESCRIPTION OF THE DRAWINGS

Fig. 1 - Fig. 8 are drawings which show the first embodiment of the present invention.

Fig. 1 is an enlarged plan view of an identification means;

Fig. 2 is an enlarged bottom view of the identification means;

Fig. 3 is a sectional view taken on line III-III in Fig. 1;

Fig. 4 is an enlarged partial plan view of a lower half case;

Fig. 5 is an enlarged plan view of the lower half case;

Fig. 6 is an enlarged partial sectional view of a metallic mold which is used when the lower half case is formed; and

Fig. 7 and Fig. 8 are enlarged sectional views which show the main portion of a cassette information detecting mechanism.

Fig. 9 - Fig. 12 show a conventional embodiment.

Fig. 9 is a perspective view of a tape cassette for 8 mm video use;

Fig. 10 is a partial sectional plan view of the aforementioned tape cassette;

Fig. 11 is an enlarged sectional plan view of the lower half case; and

Fig. 12 is an enlarged sectional view taken on line XII-XII in Fig. 11.

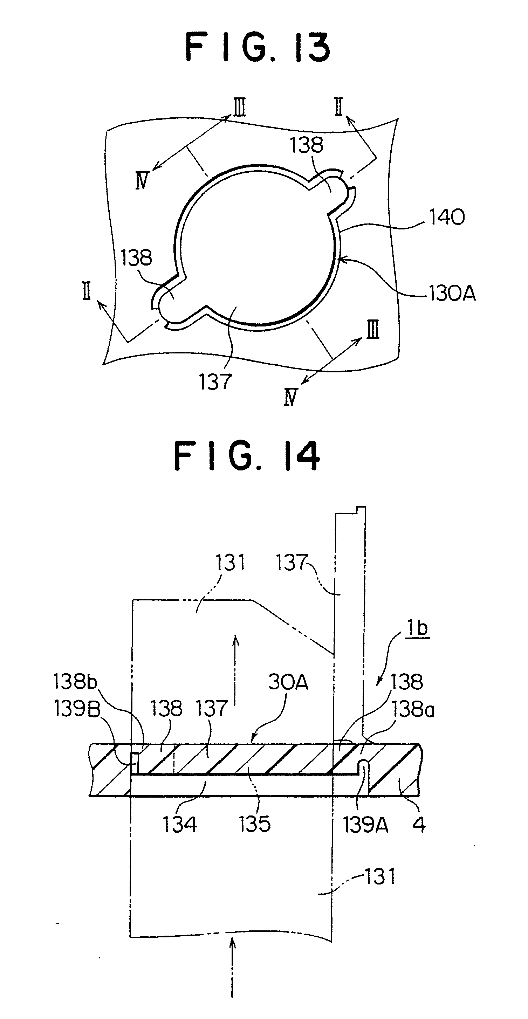

Fig. 13 - Fig. 25 are drawings which show the second embodiment of the present invention.

Fig. 13 is an enlarged plan view of an identification means;

Fig. 14 is a sectional view taken on line II-II in Fig. 13;

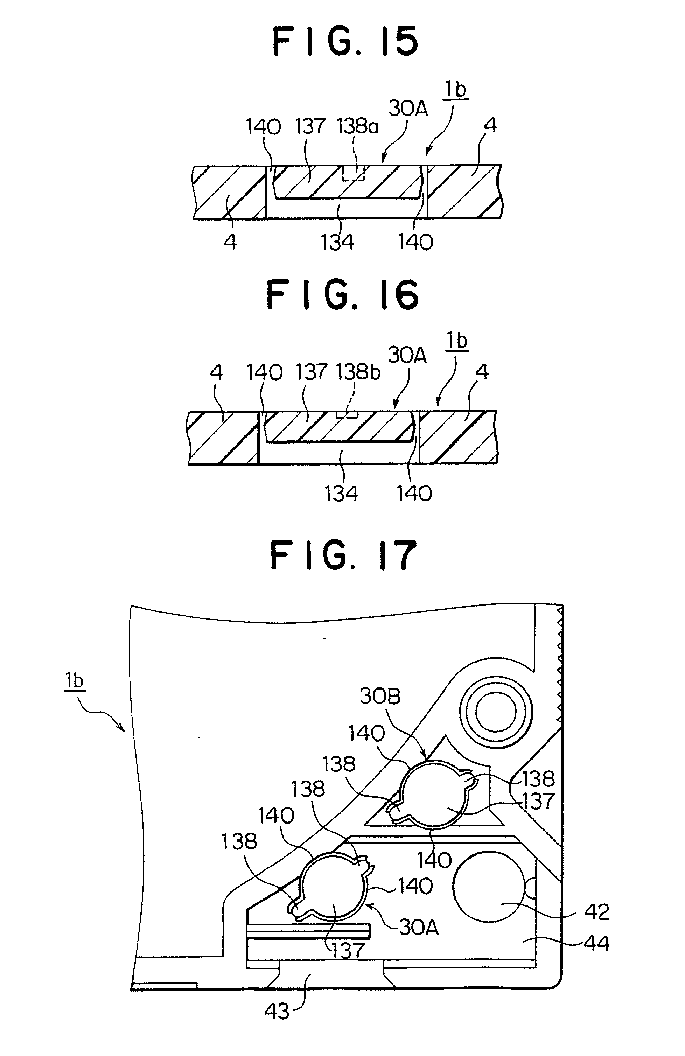

Fig. 15 is a sectional view taken on line III-III in Fig. 13;

Fig. 16 is a sectional view taken on line IV-IV in Fig. 13;

Fig. 17 is an enlarged sectional view of a lower half case;

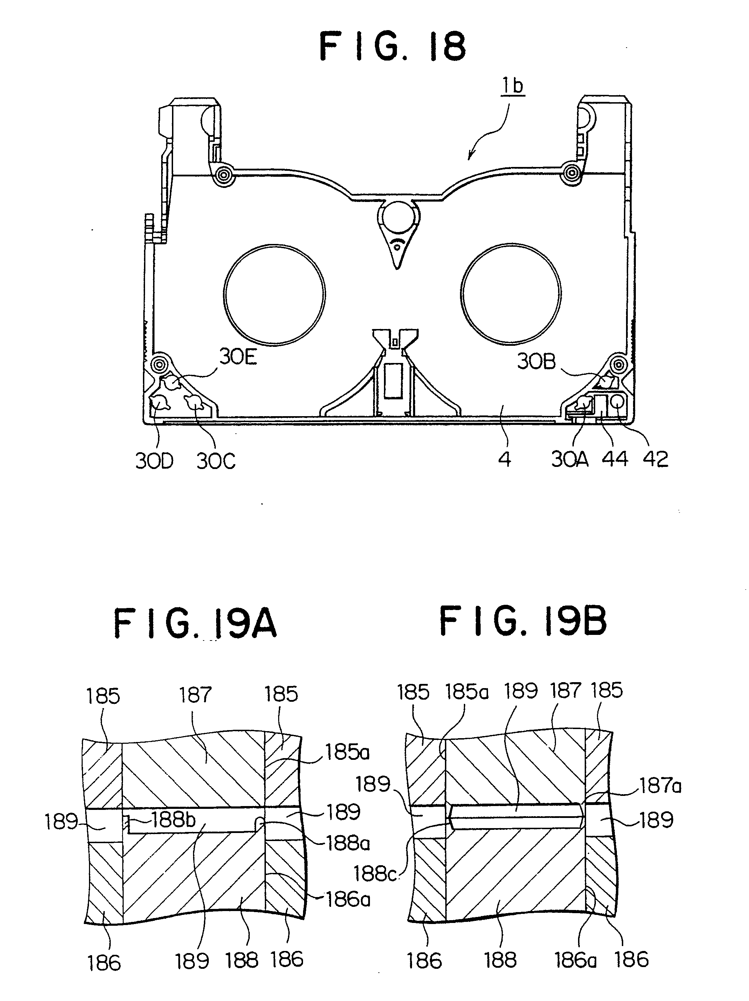

Fig. 18 is an enlarged plan view of the lower half case;

Fig. 19A and Fig. 19B are enlarged partial sectional views of a metallic mold which is used to form the lower half case;

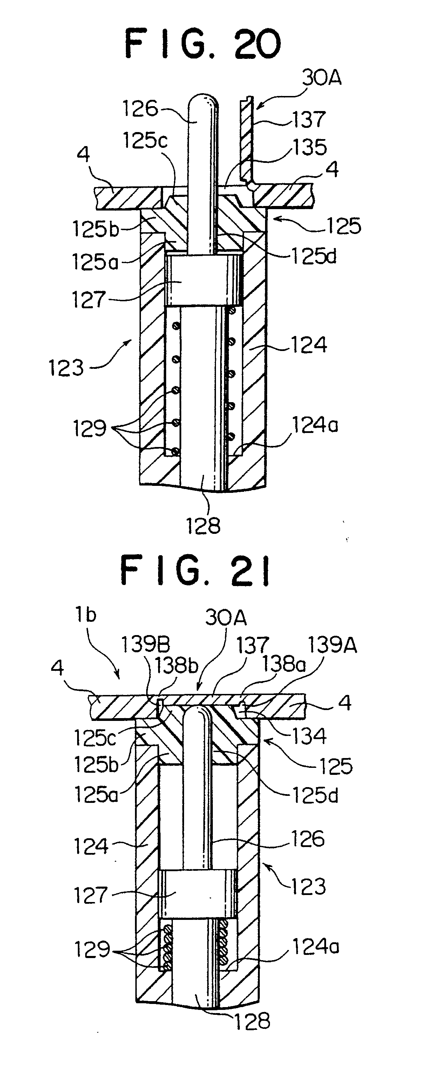

Fig. 20 and Fig. 21 are enlarged sectional views which show the main portion of a cassette information detecting mechanism;

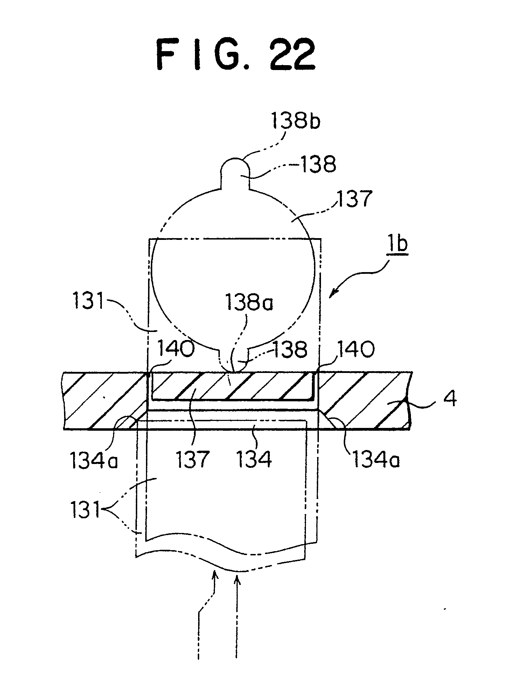

Fig. 22, Fig. 23 and Fig. 24 are enlarged plan views of the identification means of other embodiments;and

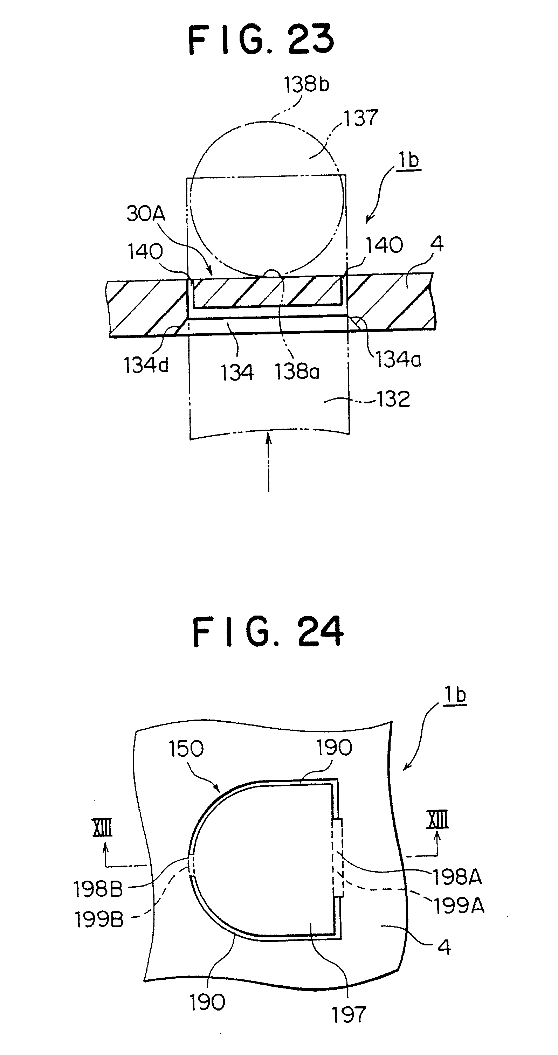

Fig. 25 is a sectional view taken on line XIII-XIII in Fig. 24.

Fig. 26 - Fig. 28 show the main body of an improved tape cassette in which a through hole can be easily formed.

Fig. 26 is an enlarged partial plan view of a lower half case;

Fig. 27 is an enlarged sectional view taken on line XV-XV in Fig. 26; and

Fig. 28 is an enlarged sectional view taken on line XVI-XVI in Fig. 26.

Fig. 29 and Fig. 30 are drawings which show a conventional embodiment.

Fig. 29 is an enlarged inside plan view of an unintentional erasing preventing mechanism of a tape cassette; and

Fig. 30 is an enlarged sectional view taken on line XX-XX in Fig. 29.

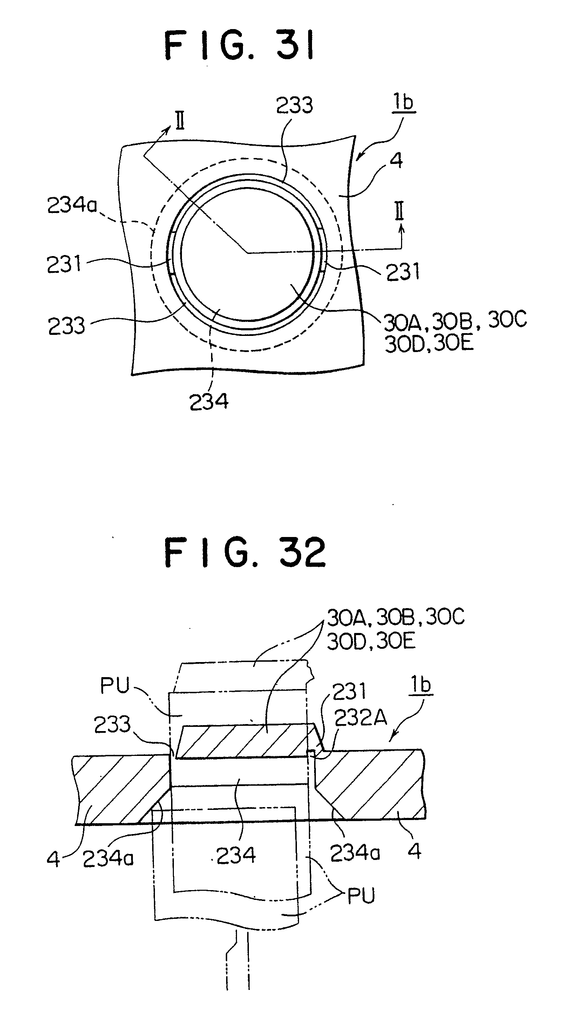

Fig. 31 - Fig. 38 are drawings which show the third embodiment of the present invention.

Fig. 31 is an enlarged plan view of an identification means;

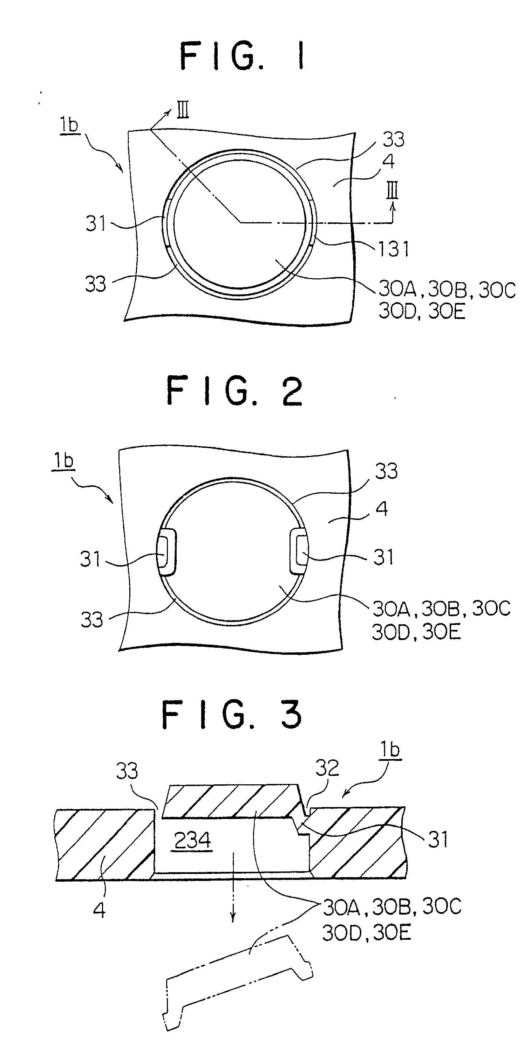

Fig. 32 is a sectional view taken on line II-II in Fig. 1;

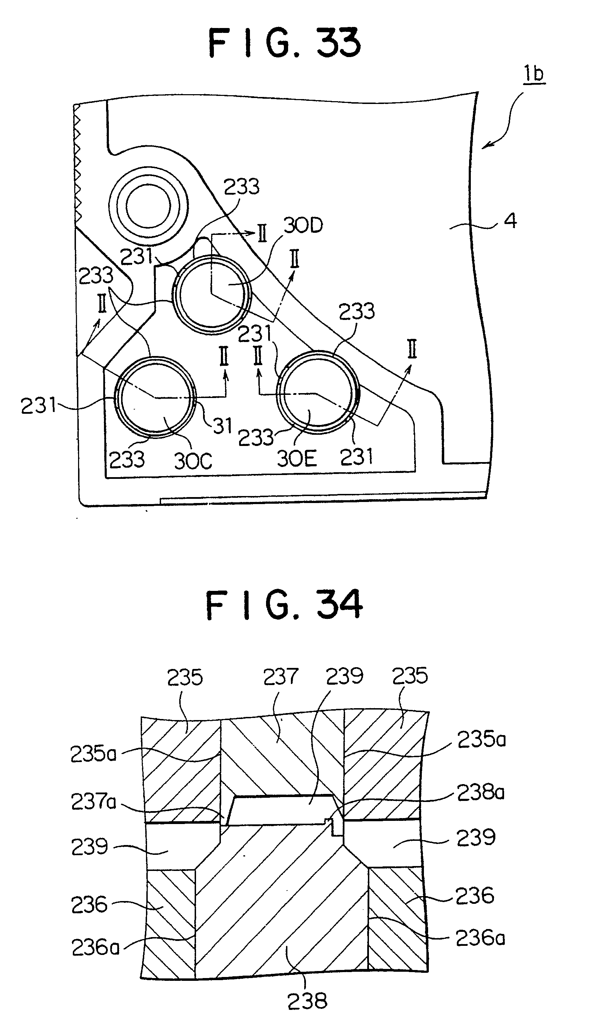

Fig. 33 is an enlarged partial plan view of the lower half case;

Fig. 34 is an enlarged partial sectional view of a metallic mold which is used to form the lower half case;

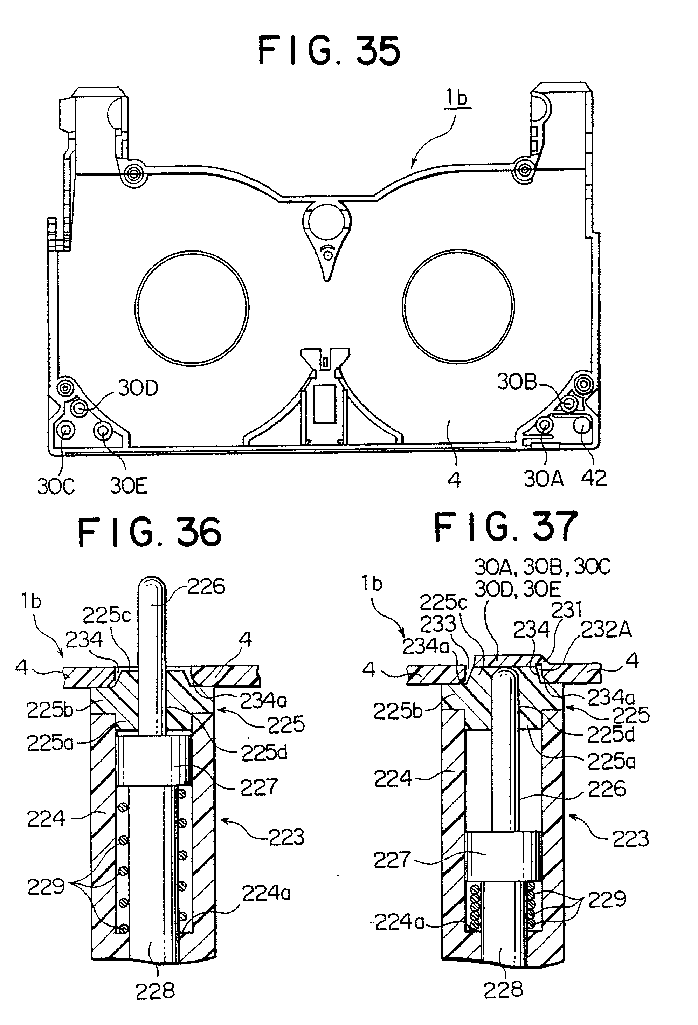

Fig. 35 is an enlarged plan view of the lower half case;

Fig. 36 and Fig. 37 are enlarged sectional views showing the main portion of a cassette information detecting mechanism; and

Fig. 38 is an enlarged sectional view showing an identification means of another example, wherein the view is illustrated in the same manner as Fig. 32.

Fig. 39 and Fig. 40 are drawings which show a conventional embodiment.

Fig. 39 is an enlarged partial plan view of a lower half case; and

Fig. 40 is an enlarged sectional view taken on line XII-XII in Fig. 11.

Fig. 41A, Fig. 41B and Fig. 42 are drawings which show an embodiment of a tape cassette relating to the present invention.

Fig. 41A is a bottom view of a main portion;

Fig. 41B is a sectional view of the main portion; and

Fig. 42 is a sectional view which shows the main portion of another embodiment relating to the present invention.

Fig. 43 is a partial sectional view of a conventional tape cassette.

## DETAILED DESCRIPTION OF THE INVENTION

The first embodiment of the present invention will be explained as follows.

Fig. 5 is a plan view of a lower half case, and Fig. 4 is an enlarged partial view of Fig. 5. Like reference characters designate corresponding parts throughout Fig. 4, Fig. 5 and Fig. 9 to Fig. 12, and explanations are omitted. Identification means 30C, 30D, 30E are provided in the region divided by an inner wall in the left lower position of a lower half case 1b in Fig. 5. Identification means 30A, 30B are provided in the same position as the identification means 70A, 70B in Fig. 11.

Fig. 1 is an enlarged plan view of the identification means 30C, 30D, 30E. Fig. 2 is an enlarged bottom view. Fig. 3 is a sectional view taken on line III-III in Fig. 1. Line III-III is shown in Fig. 4, too.

As illustrated in Fig. 3, the shape of the identification means 30C, 30D, 30E is a trapezoidal cone, the height of which is low. The identification means is engaged with a through hole 34 formed in a bottom wall 4, and connected with the bottom wall 4 through two connecting portions 31, 31 which are located on the circumference of the identification means so that they make an angle of $180^\circ$ with each other. In the portion except the connecting portions 31, 31, the identification means 30C, 30D, 30E are separated from the bottom wall 4 through circular slits 33, 33. A sharp notch is formed by a circular groove 32 on the inner surface where the connecting portion is connected with the edge of the through hole 34. When the identification means 30C, 30D, 30E are pushed from the inside in the direction shown by a dotted arrow line before assembly, stress concentration is caused in the grooves 32, 32 and cracks occur. These cracks spread and finally the connecting portion 31 is broken. In the manner described above, the identification means 30C, 30D, 30E are separated from the bottom wall 4 and drop down from the lower half case 1b as illustrated by a dotted line in Fig. 3. The identification means 30A, 30B shown in the right lower position in Fig. 5, is structured in the same manner as described above.

As explained above, the identification means 30A, 30B, 30C, 30D, 30E are selectively removed from the tape cassette in accordance with a magnetic tape to be installed in the cassette. Then, the magnetic tape is installed in the cassette, and the upper half case is fastened to the lower half case so that the tape cassette as shown in Fig. 10 is completed.

In the case of the tape cassette which has been assembled in the manner described above, the identification means 30A, 30B, 30C, 30D, 30E which have been removed in order to open the through hole 34, do not enter into the main body of the tape cassette, so that the aforementioned problems such as making noises or obstructing the motion of movable members can not be caused. Further, when the lower half case is molded, the same metallic mold which has the same cavity shape, can be utilized, so that high productivity can be obtained.

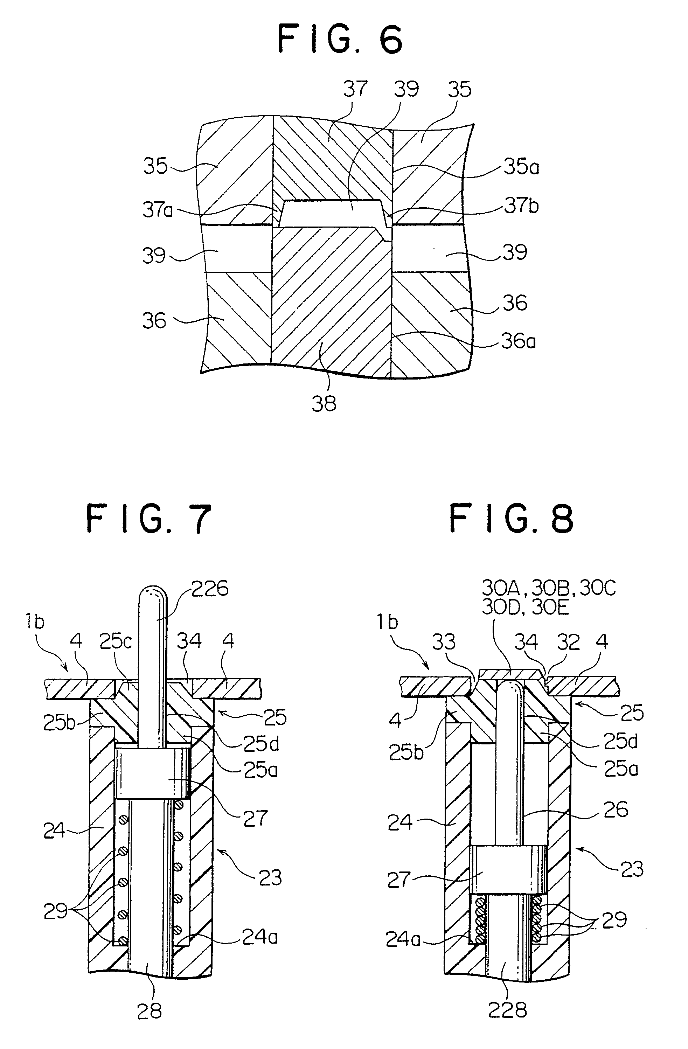

The identification means portion of the lower half case is formed in the manner illustrated in Fig. 6. A cavity 39 is formed in such a manner that: an upper core 37 is inserted into a through hole 35a of an upper mold 35, and a lower core 38 is inserted into a through hole 36a of a lower mold 36 so that a cavity 39 is formed. An arc-shaped protrusion 37a is provided to the upper core 37 in order to form the slit 33 shown in Fig. 1 - Fig. 3, and the tip surface of the protrusion 37a comes into contact with the upper edge surface of the lower core 38. The width of the slit 33 is preferably narrow. However, from the viewpoint of mechanical strength of the protrusion 37a of the upper core, the width of the tip portion of the protrusion 37a (which is the same as the width of the slit 33) is determined to be not less than 0.1 mm, and for the purpose of preventing erroneous detection, the width is preferably determined to be not more than 0.5 mm. The aforementioned circumstance is the same in the case of the protrusion 37b of the upper core which is used to form the groove 32 of the connecting portion.

In order to prevent the identification means which is not to be removed, from coming off, it is necessary to provide two connecting portions. Not less than three connecting portions may be provided to the identification means. Consequently, not less than three slits 33 may be provided.

Instead of the slits 33, these portions may be replaced with a fragile resinous film which has been formed together with the bottom wall 4 and the identification means 30A, 30B, 30C, 30D, 30E into one unit. In order to form the resinous film in the manner described above, the gap between the protrusion 37a of the upper core 37 and the lower core 38 is formed like a film gate into which unhardened resin, the filling property of which is high, is molded.

Next, referring to Fig. 7 and Fig. 8, the method by which cassette information is detected, such as the kind of a magnetic tape, will be explained as follows. Fig. 7 and Fig. 8 are enlarged sectional views showing the detecting condition in which it is detected whether the through hole 34 is opened or closed by the identification means.

A detecting unit provided in a tape deck for 8 mm video use (which will be called a deck, hereinafter) detects whether the through hole 34 is opened or closed by the identification means 30A, 30B, 30C, 30D, 30E (which are represented by "30" in Fig. 7 and Fig. 8). The detecting unit 23 comprises: a sleeve 24; a plug 25 which covers the tip portion of the sleeve 24; a piston 27 which is inserted into the sleeve 24; a detection pin 26 which is fixed to the piston 27, engaged with a through hole 25d formed in the plug 25, and protruded upward; a rod portion 28 which is fixed to the rear portion of the piston 27; and a compression coil spring 29 which pushes the piston 27 upward. The plug 25 is composed of: an inserting portion 25a which is inserted into the tip portion of the sleeve 24; a flange portion 25b which comes into contact with the edge portion of the sleeve 24; and a tapered portion 25c, the maximum diameter of which is the same as the inside diameter of the through hole 34. The plug 25 is fixed to the sleeve 24 by an appropriate method such as press-fitting or screwing. The piston 27 is pushed upward by the compression coil spring 29 which is provided between the lower edge surface of the piston 27 and a small diameter step portion 24a formed inside the sleeve 24, wherein the compression spring 29 is wound around the rod portion 28.

When the tape cassette is set to a tape deck, the tapered portion 25c of the plug 25 is engaged with the through hole 34 formed in the main body 1 of the cassette. Fig. 7 shows the state in which the through hole 34 is opened, and Fig. 8 shows the state in which the through hole 34 is closed by the identification means 30.

In the state shown in Fig. 7, the detecting pin 26 is deeply protruded into the main body 1 of the cassette, and in the state shown in Fig. 8, the detecting pin 26 comes into contact with the identification means 30 so that it is not protruded into the main body 1 of the cassette. In the manner described above, cassette information can be detected by the position of the tip of the detecting pin 26. The identification means 30 is connected with the bottom wall 4 through two connecting portions. The aforementioned notch is formed in such a manner that stress concentration is caused when a load is given from the inside of the cassette body, so that the strength of the connecting portion is sufficient, and even when the identification means is pushed by the detecting pin 26 as illustrated in Fig. 8, the connecting portion is not damaged and detection can be positively carried out.

In the case where the detection of the through hole 42 is conducted which is used to prevent an unintentional erasing and to release the preventing action, the aforementioned method can be adopted.

The embodiment of the present invention has been explained above. The shape and number of the identification means are not limited to the specific embodiment, and further the position to install the identification means is not limited to the specific embodiment so that the identification means can be provided to an appropriate position on the cassette. The aforementioned embodiment relates to a tape cassette for 8mm-video use. However, the present invention can be applied to a tape cassette for DAT (Digital Audio Tape Recorder) use and to a tape cassette to be used for other objects.

The tape cassette of the present invention is characterized in that: the identification means by which cassette information can be detected is connected with the main body of the cassette through the connecting means; and a notch which can cause stress concentration sufficient to break the connecting portion by a load which is given form the inside of the cassette, is formed on the connecting portion, so that the identification means can be selectively removed from the cassette body before the tape cassette is assembled. As a result, the metallic mold having the same cavity can be used when the main body of the cassette is molded so that the productivity can be improved. Further, the identification means is removed from the cassette body by a load given from the inside of the body before assembly. Accordingly, the removed identification means does not exist in the main body of the cassette body. Consequently, the following problems can be solved: undesirable noises made by the removed identification means when it is moved in the cassette; and obstruction of the motion of movable members in the cassette body.

The second embodiment of the present invention will be explained as follows.

Fig. 18 is an plan view of a lower half case, and Fig. 17 is an enlarged partial view of Fig. 18. Like reference characters designate corresponding parts throughout Figs. 17, 18 and Figs. 26 - 30, and explanations are omitted.

Identification means 30C, 30D, 30E are respectively provided in three positions in the region which is divided by an inner wall in the left lower portion of the lower half case 1b in Fig. 18. Identification means 30A, 30B are provided in the position where the identification means 70A, 70B are provided in Fig. 26.

Fig. 13 is an enlarged plan view of the identification means 30A. Fig. 14 is a sectional view taken on line II-II in Fig. 13. Fig. 15 is a sectional view taken on line III-III, and Fig. 16 is a sectional view taken on line IV-IV.

The structure of the identification means 30A is approximately the same as the identification means 70A, 70B which are shown in Fig. 26. The aforementioned circumstance is the same in the cases of the identification means 30B, 30C, 30D and 30E. However, one 139A of the grooves is made more shallow than the groove 139B. Consequently, the portion above the groove 139A which connects the identification means 30A with the bottom wall 4, is a little thicker (0.5 - 1.0 mm) than the corresponding portion above the groove 139B. This portion is defined as a thick connecting portion 138a.

When a punch 131 illustrated by a two-dotted-line in Fig. 14 is inserted into a cut-out portion 134 formed below a circular portion 137 and trunnions 138, 138, and pushes the aforementioned circular portion and the trunnion 138 on the side of the groove 139B, the thin connecting portion 138b above the groove 139B is broken and the thick connecting portion 138a is not broken, so that as illustrated by a three-dotted-line, the circular portion 137 is rotated upward around the thick connecting portion 138a by an angle of 90° together with the trunnion 138. As a result, the through hole 135 can be opened. The upper edge of the punch 131 on the side of the thick connecting portion 138a is cut away so that the load can be mainly impressed upon the thin connecting portion 138b. The shape of the bottom of the groove 139A is made circular in order to decrease the stress concentration caused in the thick connecting portion 138a.

The aforementioned work can be conducted after the tape cassette has been assembled. The tape cassette shown in Fig. 14 is illustrated upside down as compared with the actual position of the tape cassette, the through hole of which is punched out. When a user opens the through hole 135, it is not necessary to use a mechanical unit, the punch of which is mechanically driven. The user can open the through hole 135 with an appropriate pin. The reason is that the thin connecting portion 138b is very thin and can be broken easily, and the thickness of the thick connecting portion 138a is determined so that plastic deformation can be easily conducted on the connecting portion. The circumstances are the same in the cases of other identification means 30B, 30C, 30D and 30E.

As explained above, in this embodiment, it is easy to make the identification means open, and after the identification means has been opened, the identification means is connected with the bottom wall 4 through the thick connecting portion 138a, so that the identification means is not moved in the cassette body and the motion of a sliding member 44 is not obstructed. In this embodiment, the identification means is selectively opened after assembly, so that a metallic mold having the same shape of cavity can be used when the lower half case is molded, which is advantageous in manufacture.

The identification means of the lower half case is molded in the manner shown in Figs. 19A and 19B. Fig. 19A is a sectional view of a metallic mold corresponding to the sectional view of Fig. 14. Fig. 19B is a sectional view of a metallic mold corresponding to the sectional view of Fig. 16.

A cavity 189 is formed when an upper core 187 is inserted into a through hole 185a of an upper mold 185 and a lower core 188 is inserted into a through hole 186a of a lower mold 186. The cores 187, 188 are respectively provided with protrusions 187a, 188c which are used in order to form a slit 140 shown in Fig. 13 - Fig. 16, and the tip surfaces of the protrusions 187a, 188c come into contact with each other. It is desirable that the width of the slit 140 is rather narrow. However, from the viewpoint of mechanical strength of the protrusions 187a, 188c, the width of the tips of the protrusions 187a, 188c, which is the same as the width of slit 133, is 0.15 mm. The circumstance is the same in the case of the protrusion 188b of the lower core 188. The width of the protrusion 188a of the lower core 188 which is used so as to form a groove 139A, may be wide in order to chamfer the bottom portion of the groove and to allow the thick connecting portion to be deformed easily.

Concerning the identification means which are not removed, it is necessary to provide two connecting portions as shown in the aforementioned embodiment in order to prevent them from coming off. Not less than two thin connecting portions which can be broken, may be provided. Accordingly, two slits 140 may be provided as shown in the aforementioned embodiment, and further not less than three slits may be provided.

The slit 140 may be replaced with a resinous film which is molded into one body together with the bottom wall 4 and the identification means 30A, 30B, 30C, 30D, 30E, wherein the resinous film can be easily broken. In order to form the aforementioned resinous film, an unhardened resin, the filling property of which is excellent, is used as the material, and the film is molded into a space, the shape of which is like a film gate, between the protrusions 187a and 188c in Fig. 19B.

Next, referring to Fig. 20 and Fig. 21, the method by which cassette information such as the kind of a magnetic tape, will be explained as follows. Fig. 20 and Fig. 21 are enlarged sectional views showing the detecting condition in which it is detected whether the through hole 135 is opened or closed by the identification means.

A detecting unit provided in a tape deck for 8 mm video use (which will be called a deck, hereinafter) detects whether the through hole 135 is opened or closed by the identification means 30A, 30B, 30C, 30D, 30E (which are represented by "30" in Fig. 8 and Fig. 21). The detecting unit 123 comprises: a sleeve 124; a plug 125 which covers the tip portion of the sleeve 124; a piston 127 which is inserted into the sleeve 124; a detection pin 126 which is fixed to the piston 127, engaged with a through hole 125d formed in the plug 125, and protruded upward; a rod portion 128 which is fixed to the rear portion of the piston 127;.and a compression coil spring 129 which pushes the piston 127 upward. The plug 125 is composed of: an inserting portion 125a which is inserted into the tip portion of the sleeve 124; a flange portion 125b which comes into contact with the edge portion of the sleeve 124; and a taper portion 125c, the maximum diameter of which is the same as the inside diameter of the through hole 134. The plug 125 is fixed to the sleeve 124 by an appropriate method such as press-fitting or screwing. The piston 127 is pushed upward by the compression coil spring 129 which is provided between the lower edge surface of the piston 127 and a small diameter step portion 124a formed inside the sleeve 124, wherein the compression spring 129 is wound around the rod portion 128.

When the tape cassette is set to a tape deck, the tapered portion 125c of the plug 125 is engaged with the through hole 34 formed in the main body 1 of the cassette. Fig. 20 shows the state in which the through hole 134 is opened, and Fig. 21 shows the state in which the through hole is closed by the identification means 130.

In the state shown in Fig. 20, the detecting pin 126 is deeply protruded into the main body 1 of the cassette, and in the state shown in Fig. 21, the detecting pin 126 comes into contact with the identification means 130 so that it is not protruded into the main body 1 of the cassette. In the manner described above, cassette information can be detected by the position of the tip of the detecting pin 126. In Fig. 20, the circular portion 137 is opened upward so that the through hole 135 can be fully formed, so that the detecting pin 126 can not be obstructed when it enters into the main body 1 of the cassette. As illustrated in Fig. 21, the circular portion 137 of the identification means is connected with the bottom wall 4 through two connecting portions 138a, 138b, so that mechanical strength of the connecting portion is sufficient. Consequently, even when the circular portion 137 is pushed by the detecting pin 126, the connecting portion is not damaged and detection can be positively carried out. In order to prevent an unintentional erasing and to release it, the through hole 42 illustrated in Fig. 18 is opened and closed in the same manner as described above.

Fig. 22 is a sectional view of the identification means of an embodiment which has been obtained by further improving the aforementioned embodiment, wherein Fig. 22 has been drawn in the same manner as Fig. 14.

In this embodiment, an inclined surface 134a is formed on the lower edge of a cut-out portion 134. Even when a punch 131 is not set correctly with regard to the cut-out portion 134, wherein the correct position of the punch 131 is illustrated by a two-dotted-line and the incorrect position is illustrated by a three-dotted-line in the drawing, the punch 131 is contacted with and guided by the inclined surface 134a so that the punch 131 can come into the correct position which is illustrated by the two-dotted-line. Therefore, the bottom wall 4 is not damaged by the punch 131. Further, it is not necessary to position the lower half 1b accurately with regard to the punch 131, so that the positioning can be carried out with high productivity. In the same manner as the embodiment shown in Fig. 14, the tape cassette is illustrated upside down in Fig. 22 as compared with the actual position in which the aforementioned operation is carried out. Other points are the same as the aforementioned embodiment.

In the aforementioned embodiments, the following structure may be adopted: the trunnion 138 is not provided and the connecting portions 138a, 138b directly connected with the bottom wall 4 are provided in the two positions on the circumference of the circular portion 137, wherein the two positions make an angle of 180° with each other; and when the through hole is opened, the thin connecting portion 138b is broken and the thick connecting portion 138a is deformed so that the circular portion 137 can enter into the main body of the tape cassette. Fig. 23 is an enlarged sectional view of an identification means which is composed in the aforementioned manner. In the case of the aforementioned identification means, the shape of the punch 32 can be made circular, which is advantageous. The entire thickness of one 138 of the trunnions may be the same as the thickness of the aforementioned thick connecting portion 138a so that the entire trunnion region can be a thick connecting portion. As a result, this trunnion is bent at a small radius of curvature, so that the through hole can be easily opened by hand.

Fig. 24 is an enlarged plan view of the identification means of another embodiment. Fig. 25 is a sectional view taken on line XIII-XIII in Fig. 24.

In this embodiment, the aforementioned circular portion 137 is replaced with a choking plate 197 which is composed of a semicircle and rectangle which are combined with each other. A thick connecting portion 198A is formed by a groove 199A at the center of the straight line portion located on its outer circumference, and a thin connecting portion 198B is formed by a groove 199B at the center of the semicircular portion. Portions of the choking plate 197 except the connecting portions are separated from the bottom wall 4 by slits 190. In Fig. 25, a state is shown by a dotted line in which a through hole 195 has been opened by a punch 133.

When the thick connecting portion 198A is formed to be linear, it can be made long, so that the choking plate 197 can be positively connected with the bottom plate 4 after the through hole has been opened. Accordingly, its reliability can be further improved.

The embodiment of the present invention has been explained above. However, it should be understood that the shape and number of the identification means are not limited to the specific embodiment, and the positions in which the identification means are installed, are not limited to the specific embodiment. In the aforementioned embodiment, the present invention has been applied to a tape cassette for 8mm video use. However, the present invention can be also applied to a tape cassette for DAT (digital audio tape recorder) use and other tape cassettes.

In the present invention, the identification means by which the cassette information is connected with the main body of the cassette under the condition that the through hole has been opened on the surface of the cassette. Consequently, the identification means is not separated from the cassette, so that the problem that the separated identification means is moved in the cassette can be prevented. As a result, the movement of other movable members (for example, the aforementioned sliding member 44) in the cassette is not obstructed, so that the tape cassette can be always maintained in a normal condition and its reliability is high. Since the connecting portion is formed in the manner described above, the through hole of the aforementioned identification means can be opened after the manufacture of the tape cassette has been completed. Accordingly, this type of tape cassette is advantageous because manufacturers can form the cassette body using a metallic mold having the same cavity shape, and users can record necessary information in the main body of the cassette.

The third embodiment of the present invention will be explained as follows.

Fig. 35 is an enlarged plan view of a lower half case, and Fig. 33 is an enlarged partial view of Fig. 35. Like parts in each of Fig. 33, 35, 39 and 40 are identified by the same reference character, and explanations will be omitted. Identification means 30C, 30D, 30E are respectively provided in three positions in the region which is divided by an inner wall in the left lower portion of the lower half case 1b in Fig. 35. Identification means 30A, 30B are provided in the position where the identification means 70A, 70B are provided in Fig. 39

Fig. 31 is an enlarged plan view of the identification means 30C, 30D, 30E. Fig. 32 is a sectional view taken on line II-II in Fig. 31. Line II-II is also drawn in Fig. 33.

The shape of the identification means 30C, 30D, 30E is a trapezoidal cone, the height of which is low. The identification means is engaged with a through hole 234 formed in a bottom wall 4, and connected with the bottom wall 4 through two connecting portions 231, 231 which are located on the circumference of the identification means so that they make an angle of 180° with each other. In the portion except the connecting portions 231, 231, the identification means 30C, 30D, 30E are separated from the bottom wall 4 through circular slits 233, 233. The lower edge portion of the through hole 234 is formed into a trapezoidal cone so that inclined cone-shaped surfaces 234a, 234a are formed, and a sharp notch is formed by a circular groove 232A on the portion located outside with regard to the cassette body where the connecting portion 231 is connected with the through hole 234.

When the identification means 30C, 30D, 30E are pushed from the outside of the cassette by punch PU shown by a two-dotted line before the tape cassette is assembled, stress concentration occurs in the groove 232A, 232A so that cracks are caused in the grooves 232A, 232A. These cracks spread and the connecting portion 231 is broken. In the manner described above, the identification means 30C, 30D, 30E are separated from the bottom wall 4 and removed from the lower half case 1b as illustrated by a two-dotted chain line. However, the groove 232A is not essential to the present invention. Even when punch PU is not set correctly with regard to the through hole 234, wherein the correct position of punch PU is illustrated by a two-dotted-line and the incorrect position is illustrated by a three-dotted-line in the drawing, punch PU is contacted with and guided by the inclined surface 234a so that punch PU can come into the correct position which is illustrated by the two-dotted-line. Therefore, the bottom wall 4 is not damaged by punch PU. Further, it is not necessary to position the lower half 1b accurately with regard to punch PU, so that the positioning can be carried out with high productivity. The tape cassette is illustrated upside down in Fig. 32 as compared with the actual position in which the aforementioned operation is carried out. The structure of the identification means 30A, 30B located in the right lower position in Fig. 35 is the same as that described above.

In the manner described above, the identification means 30A, 30B, 30C, 30E are selectively removed from the main body of the cassette in accordance with a magnetic tape to be installed, and the upper and lower half cases are fastened. Then, a tape cassette which is the same as shown in Fig. 9 and Fig. 10 is completed.

The identification means portion in the lower half case is formed in the manner shown in Fig. 34. A cavity 239 is formed in such a manner that: an upper core 237 is inserted into a through hole 235a of an upper mold 235; and a lower core 238 is inserted into a through hole 236a of a lower mold 236. The upper core 237 is provided with an arc-shaped protrusion 237a which is utilized to form a slit 233 shown in Fig. 31 and Fig. 32. The tip surface of the protrusion 237a comes into contact with the upper end surface of the lower core 238. It is preferable that the width of the slit 233 is rather narrow. However, from the viewpoint of mechanical strength of the protrusion 237a of the upper core, the width of the tip portion of the protrusion 237a (wherein the aforementioned width is the same as that of the slit 233) is preferably not less than 0.1 mm, and further from the viewpoint of the prevention of an unintentional erasing, the width is preferably not more than 1.5mm. The aforementioned dimensional relation is the same in the case of a protrusion 238a of the lower core.

In order to prevent the identification means not removed, from being accidentally removed, two connecting portions must be provided as shown in the aforementioned embodiment. Not less than three connecting portions may be provided. Consequently, two slits 233 are provided in the same manner as described above, and not less than three slits 233 may be provided.

The slit 233 may be replaced with a resinous film which is molded into one body together with the bottom wall 4 and the identification means 30A, 30B, 30C, 30D, 30E, wherein the resinous film can be easily broken. In order to form the aforementioned resinous film, an unhardened resin, the filling property of which is excellent, is used as the material, and the film is molded into a space, the shape of which is like a film gate, between the protrusions 237a and the lower core 238 in Fig. 34.

Next, referring to Fig. 36 and Fig. 37, the method by which cassette information such as the kind of a magnetic tape is detected, will be explained as follows. Fig. 36 and Fig. 37 are enlarged sectional views showing the detecting condition in which it is detected whether the through hole 34 is opened or closed.

A detecting unit provided in a tape deck for 8 mm video use (which will be called a deck, hereinafter) detects whether the through hole 234 is opened or closed by the identification means 30A, 30B, 30C, 30D, 30E (which are represented by "30" in Fig. 34 and Fig. 37). The detecting unit 223 comprises: a sleeve 224; a plug 225 which covers the tip portion of the sleeve 224; a piston 227 which is inserted into the sleeve 224; a detection pin 226 which is fixed to the piston 227, engaged with a through hole 225d formed in the plug 225,and protruded upward; a rod portion 228 which is fixed to the rear portion of the piston 227;.and a compression coil spring 229 which pushes the piston 227 upward. The plug 225 is composed of: an inserting portion 225a which is inserted into the tip portion of the sleeve 224; a flange portion 225b which comes into contact with the edge portion of the sleeve 224; and a tapered portion 225c, the maximum diameter of which is the same as the inside diameter of the through hole 134. The plug 225 is fixed to the sleeve 224 by an appropriate method such as press-fitting or screwing. The piston 227 is pushed upward by the compression coil spring 229 which is provided between the lower edge surface of the piston 227 and a small diameter step portion 224a formed inside the sleeve 224, wherein the compression spring 229 is wound around the rod portion 228.

When the tape cassette is set to a tape deck, the tapered portion 225c of the plug 225 is engaged with the through hole 234 formed in the main body 1 of the cassette. Fig. 36 shows the state in which the through hole 234 is opened, and Fig. 37 shows the state in which the through hole is closed by the identification means 230.

In the state shown in Fig. 36, the detecting pin 226 is deeply protruded into the main body 1 of the cassette, and in the state shown in Fig. 37, the detecting pin 226 comes into contact with the identification means 30 so that it is not protruded into the main body 1 of the cassette. In the manner described above, cassette information can be detected by the position of the tip of the detecting pin 226. Since the identification means 30 is connected with the bottom wall 4 by two connecting portions, the mechanical strength of the connecting portion is sufficient, so that the connecting portion can not be damaged by the detecting pin 226 even when the connecting portion is pushed by the detecting pin under the condition shown in Fig. 37. Accordingly, detection can be positively conducted. The detection of the through hole 242 illustrated in Fig. 35, which is conducted for the purpose of the prevention of an unintentional erasing and the release, is conducted in the same manner as described above.

In the embodiment explained above, the identification means is removed from the bottom wall by the load given from the inside of the main body of the tape cassette. It is possible to give the load from the outside of the cassette. Fig. 38 is an enlarged sectional view of the identification means in the aforementioned case, wherein the drawing is made in the same way as Fig. 32.

A circular protrusion 240 is provided on a bottom wall 4 of the lower half case 1b in such a manner that: the circular protrusion 240 protrudes upward so that a through hole 234 can be extended in the direction of the inside of the cassette. A cone-shaped inclined surface 240a is formed on the inner circumferential surface of the edge portion of the circular protrusion 240. A sharp notch is formed by a groove 232B on the upper surface of a connecting portion 231.

In order to separate and remove the identification means 30A, 30B, 30C, 30D, 30E from the bottom wall 4, the identification means 30A, 30B, 30C, 30D, 30E are pushed by punch PU from the inside to the outside of the main body of the tape cassette. In the same manner as shown in Fig. 32, even when punch PU is not accurately directed to the through hole 234 as illustrated by a three-dotted-chain line, punch PU is contacted with a cone-shaped inclined surface 40a and guided by the aforementioned surface, and finally the position of punch PU is corrected, so that the through hole 234 can be safely opened.

An embodiment of the present invention has been explained above. However, it is possible to use other appropriate guide means to guide punch PU instead of the cone-shaped inclined surface which is utilized in the aforementioned embodiment. Further, the shape and number of the identification means may be changed into another appropriate shape and number, and the position to install the identification means may be changed. In the aforementioned embodiment, the present invention is applied to a tape cassette for 8mm video use, although the present invention can be applied to a tape cassette for DAT (digital audio tape recorder) use and other uses.

In the tape cassette of the present invention, the identification means by which the cassette information is detected and the guide means to guide a tool which is used to selectively separate the identification means from the main body of the cassette, are provided in the main body of the cassette. Therefore, the main body of the cassette can be formed using a metallic mold having the same cavity shape. Even when the positional relation between the main body of the cassette and the aforementioned tool is not correct when the identification means is separated from the main body of the cassette, the tool is relatively guided by the guide means provided to the cassette so that the position of the tool can be corrected. As a result, the following effects can be provided: the main body of the cassette is not damaged by the tool in the process of removing the identification means; and it is not necessary to accurately position the tool with regard to the main body of the cassette, so that the aforementioned work can be easily conducted and productivity can be improved.

The following are the explanations of the fourth and fifth embodiments.

Fig. 41A and Fig. 41B show the fourth embodiment of the tape cassette of the present invention. Fig. 41A is a bottom view, and Fig. 41B is a sectional view of the main portion.

The numeral 311 shows a plurality of punching tabs which are formed at the right rear side of the bottom of the lower half case 1b. In the same manner as the punching tabs 311, the punching tabs 312 (not illustrated in the drawing) are formed at the corner on the left rear side of the lower half 1b. The holes which have been formed by punching some of these punching tabs 311, 312, are detected so that the kind of the tape cassette can be distinguished.

The punching tabs 311, 312 are provided inside the vertical walls 311a, 312a (wherein the vertical wall 312a is not illustrated) which are formed on the bottom surface of the lower half 1b.

In order to punch the punching tabs 311, 312 easily and accurately, notches 311b, 311c, 312b, 312c are formed along the vertical walls 311a, 312a from both sides of the punching tabs 311, 312, wherein the notches 312b, 312c are not illustrated in the drawing.

Consequently, holes can be accurately and easily formed by punching the punching tabs 311, 312 in such a manner that: punching is conducted from the upper side (the inner side) of the lower half 31b; or after tape cassette has been assembled and necessary information has been recorded, punching is conducted from the lower side of tape cassette. Namely, in the case of the aforementioned embodiment, any of a tape cassette maker and a soft maker can easily and accurately form the holes to distinguish the kind of a tape cassette.

Fig. 42 is a sectional view of the main portion of the tape cassette of the fifth embodiment according to the present invention.

In this embodiment, the technological concept is the same as the aforementioned embodiment, and only the shapes of the notches 311b, 311c are different, so that the detailed explanations will be omitted here.

The main body of the tape cassette of the tape cassette of the present invention is composed by fastening two half-cases. In this tape cassette, a punching portion for forming holes which are used to detect the kind of the tape cassette, is provided to the cassette, and notches are formed along the punching portion on both sides of the plate on which the punching portion is formed. Any of a tape cassette maker and a soft maker, in other words before the assembly of the tape cassette or after the assembly, the holes to distinguish the kind of the tape cassette can be easily and accurately formed.

## Claims

1. A tape cassette adapted to embody a binary code representing cassette information in the main body thereof, the tape cassette comprising:

   a path perforated through an outer wall of the main body of the tape cassette for allowing a search pin of a detector in a deck to pass therethrough, the path having an opening on a surface of the outer wall;

   a block member for blocking the opening; and

   means for bridging a gap between the periphery of the block member and the main body to connect the both at least at one bridging portion, the bridging means comprising

   a notched zone provided with a notch on a surface of bridging means along the periphery of the block member for concentrating stress therealong when a punching force is exerted onto the block member in an exerting direction thereby breaking the block member from the main body to expose the opening, whereby a bit pattern is embodied by selectively applying the punching force onto the block member.

2. The tape cassette of claim 1, wherein the bridging means is provided with the notch on the inner surface thereof and the exerting direction is from the inside to the outside of the tape cassette.

3. The tape cassette of claim 1, wherein the bridging means is provided with the notch on the outer surface and connects the block member to the main body at two connecting portions.

4. The tape cassette of claim 1, wherein the bridging means is provided with the notch on each of the inner and outer surfaces and the stress is concentrated by the punching force in both directions between the inside and the outside of the cassette case.

5. The tape cassette of claim 4, wherein the bridging means bridges all area of the gap.

6. The tape cassette of claim 5, further providing a standing wall surrounding the opening.

7. The tape cassette of claim 1, further comprising means for guiding a tool to separate the block member.

# F I G. 1

# F I G. 2

# F I G. 3

14

# F I G. 4

# F I G. 5

# FIG. 6

# FIG. 7

# FIG. 8

# FIG. 9

# FIG. 10

# FIG. 11

# FIG. 12

# F I G. 13

# F I G. 14

# F I G. 15

# F I G. 16

# F I G. 17

# FIG. 18

1b

30E    30B

30D    30C    4    30A 44 42

# FIG. 19A    FIG. 19B

185    187    185

185a

189    189

189    188b    188a

186    189    188    186

185 185a 189 187 185

189    187a

189

188c

186    188    186a 186

# F I G. 20

# F I G. 21

# F I G. 22

# FIG. 23

# FIG. 24

# F I G. 25

133
198B
197
190
4
198A
199B    195    199A
1b

# F I G. 26

1b
70B
140
138
138 XIV
140
XIV XVI
138
70A
140
137
42
44
137
XVI
43

# F I G. 27

# F I G. 28

# F I G. 29

# F I G. 30

# F I G. 31

233  1b

II

234a

231  II

231

233  30A, 30B, 30C
30D, 30E

234

# F I G. 32

30A, 30B, 30C
30D, 30E

PU  231  1b

233  232A

4  234a  234  234a  4

PU

# F I G. 33

# F I G. 34

# FIG. 35

30D

30B

30C    30E

4    30A    42

# FIG. 36

226

1b

225c

234

4

225b

225a

4

234a

225

225d

227

224

223

229

224a

228

# FIG. 37

30A, 30B, 30C
30D, 30E

1b

225c

233

234

231

232A

234a

4

4

234a

225

225b

225d

224

225a

226

227

223

224a

229

228

# FIG. 38

# FIG. 39

# F I G. 40

PU

270b

273    70A    270a    4    44    42

1b

1    1a

# F I G. 41A

1b

311

# F I G. 41B

311b    311    311a

311c    1b

# F I G. 42

311b    311    311a

1b

311c

# F I G. 43

333    332

1b